# EUROPÄISCHE PATENTSCHRIFT

(11) **EP 2 801 738 B1**
(45) Veröffentlichungstag und Bekanntmachung des Hinweises auf die Patenterteilung: **30.01.2019**
(21) Anmeldenummer: 14166593.5
(22) Anmeldetag: 30.04.2014
(51) Int. Cl.: F16H 61/28, F16H 25/20

(54) **SCHALTANORDNUNG FÜR EIN KRAFTFAHRZEUGGETRIEBE**
Gear shift assembly for a motor vehicle transmission system
Agencement de commutation pour boîte de vitesses de véhicule automobile

(30) Priorität: 03.05.2013 DE 102013104552
(43) Veröffentlichungstag der Anmeldung: 12.11.2014
(73) Patentinhaber: Magna PT B.V. & Co. KG, 74199 Untergruppenbach (DE)
(72) Erfinder: Bünder, Carsten, 70563 Stuttgart (DE)
(74) Vertreter: Rausch, Gabriele

(56) Entgegenhaltungen:
- WO-A1-2005/057051
- WO-A1-2006/076877
- DE-A1-102004 038 955
- FR-A1- 2 938 938
- JP-A- 2008 174 189
- JP-A- 2009 270 709

## Beschreibung

Die vorliegende Erfindung betrifft eine Schaltanordnung für ein Kraftfahrzeuggetriebe, das wenigstens eine Gangstufe aufweist, die mittels einer zugeordneten Schaltkupplung einlegbar und auslegbar ist, wobei die Schaltanordnung ein Gehäuse und wenigstens eine Schaltstange aufweist, die an dem Gehäuse beweglich gelagert ist und die mit der Schaltkupplung koppelbar ist.

Ferner betrifft die vorliegende Erfindung ein Verfahren zum Betätigen einer Schaltkupplung eines Kraftfahrzeuggetriebes.

Schaltanordnungen dieser Art sind im Stand der Technik bekannt. In der Regel weist ein Kraftfahrzeuggetriebe für jeweils zwei Gangstufen ein Schaltkupplungspaket aus zwei Schaltkupplungen auf, die mittels einer gemeinsamen Schaltmuffe betätigbar sind. Die Schaltkupplungen können dabei Klauenkupplungen sein, sind jedoch vorzugsweise Synchron-Schaltkupplungen. Das Kraftfahrzeuggetriebe ist vorzugsweise ein Stirnradgetriebe in Vorgelegebauweise.

Jede Schaltmuffe ist bei einer üblichen Schaltanordnung mit einer Schaltstange gekoppelt. Die Schaltstangen weisen jeweils Nuten auf, in die ein Schaltfinger eingreifen kann, der an einer Schaltwelle festgelegt ist. Die Schaltwelle kann dabei parallel zu den Schaltstangen angeordnet sein. In diesem Fall führt ein Verdrehen der Schaltwelle zu einem Wählvorgang, bei dem eine bestimmte Schaltstange angewählt wird, und ein Längsversetzen der Schaltwelle führt zu einem Schaltvorgang, bei dem eine der Schaltstange zugeordnete Schaltkupplung betätigt wird. Es ist auch bekannt, die Schaltwelle quer zu derartigen Schaltstangen anzuordnen. In diesem Fall erfolgt das Wählen durch einen Längsversatz der Schaltwelle, und der Schaltvorgang wird durch einen Verdrehvorgang der Schaltwelle eingeleitet.

Es ist auch bekannt, Schaltwellen mit mehreren Schaltfingern auszustatten, die jeweils einer Schaltgabel zugeordnet sind. Die Schaltgabeln greifen jeweils in zugeordnete Schaltmuffen von Schaltkupplungspaketen. Hierbei wird die Schaltstange zum Schalten in der Regel axial versetzt und zum Anwählen einer Schaltgabel verdreht. Dabei ist es auch bekannt, an einer solchen Schaltwelle für jede Schaltkupplung eine Mehrzahl von axial hintereinander versetzt angeordneten Schaltfingern vorzusehen. Hierdurch wird es ermöglicht, eine Gangstufe eingelegt zu lassen und eine weitere Gangstufe einzulegen. Dies ist insbesondere auf dem Gebiet der Doppelkupplungsgetriebe relevant. Doppelkupplungsgetriebe weisen zwei Teilgetriebe auf, von denen jeweils eines aktiv zur Leistungsübertragung verwendet wird und das andere jeweils inaktiv ist. In dem inaktiven Teilgetriebe wird dann in der Regel eine "Anschluss"-Gangstufe vorgewählt, so dass ein Gangwechsel von der Quellgangstufe in die Anschlussgangstufe durch überschneidende Betätigung von zwei Reibkupplungen erfolgen kann.

Für automatisierte Schaltgetriebe und Doppelkupplungsgetriebe ist es auch bekannt, jeder der Schaltstangen einen eigenen Aktuator vorzusehen, so dass die Schaltkupplungspakete unabhängig voneinander betätigbar sind.
Eine Aktuatorvorrichtung ist beispielsweise aus dem Dokument FR 29 38 938 A1 bekannt, wobei die Aktuatorvorrichtung eine Spindel und eine Mutter mit einem Schaltfinger aufweist. Der Schaltfinger ist mit einer Schaltstange gekoppelt, wobei über diese Schaltstange eine Schaltkupplung betätigt werden kann. Wird die Spindel in Umfangsrichtung gedreht, dann wird die Mutter je nach Drehrichtung entlang einer axialen Richtung verschoben und dadurch die Schaltkupplung betätigt. Durch die Kopplung des Schaltfingers mit der Schaltstange kann die Schaltkupplung sowohl durch ein Drücken als auch durch ein Ziehen betätigt werden.

In dem Dokument WO 2005/057051 A1 ist eine Schaltanordnung offenbart, die ein schnelles Schalten der Gangstufen ermöglicht. Dabei kann ein Schaltfinger mit einer ersten Schaltstange oder mit einer zweiten Schaltstange gekoppelt werden und wie aus dem Dokument FR 29 38 938 A1 bekannt in axialer Richtung bewegt werden. Durch ein Bewegen des Schaltfingers in eine erste axiale Richtung, kann eine erste Schaltkupplung betätigt werden und durch ein Bewegen des Schaltfingers in eine zweite axiale Richtung, kann eine zweite Schaltkupplung betätigt werden. Dadurch können mit der offenbarten Schaltanordnung insgesamt vier Gangstufen eingelegt werden.

Eine Schaltanordnung gemäß dem Oberbegriff des Anspruchs 1 und ein Verfahren zum Betätigen einer Schaltkupplung mittels einer Schaltanordnung eines Kraftfahrzeuggetriebes nach dem Oberbegriff des Anspruchs 14 ist aus der WO 2006/076877 A1 bekannt.

Ferner ist es auf dem Gebiet der Fahrzeuggetriebe bekannt, Schaltwalzen zum Betätigen von Schaltkupplungen zu verwenden. Die Schaltwalzen weisen dabei eine Schaltwalzenkontur auf, in die ein mit einer Schaltgabel verbundener Mitnehmer greift, derart, dass Drehbewegungen der Schaltwalze in Axialbewegungen der Schaltgabel umgesetzt werden können. Auf dem Gebiet der Doppelkupplungsgetriebe ist es bekannt, jedem Teilgetriebe eine eigene Schaltwalze zuzuordnen. Es ist jedoch auch möglich, die zwei Teilgetriebe mit nur einer einzigen Schaltwalze zu bedienen. Im letzteren Fall ergeben sich aufgrund des sequentiellen Schaltablaufes Nachteile in der Schaltzeit Ferner ergibt sich ein sehr großer Durchmesser der einzelnen Schaltwalze, so dass die Schaltanordnung einen relativ großen Raum innerhalb des Getriebegehäuses einnimmt.

Vor dem obigen Hintergrund ist es eine Aufgabe der Erfindung, eine verbesserte Schaltanordnung sowie ein verbessertes Verfahren zum Betätigen einer Schaltanordnung anzugeben.

Diese Aufgabe wird zum einen gelöst durch eine Schaltanordnung für ein Kraftfahrzeuggetriebe, das wenigstens eine Gangstufe aufweist, die mittels einer zugeordneten Schaltkupplung einlegbar und auslegbar ist, mit einem Gehäuse, mit einer Spindel, die entlang einer Spindelachse ausgerichtet ist, ein Spindelgewinde aufweist und an dem Gehäuse drehbar gelagert ist, mit einer Mutter, die ein Muttergewinde aufweist, das mit dem Spindelgewinde in Eingriff steht, wobei an der Mutter ein Schaltfinger ausgebildet ist, und mit wenigstens einer Schaltstange, die an dem Gehäuse beweglich gelagert ist und die mit der Schaltkupplung koppelbar ist, wobei an dem Gehäuse eine Radialnut vorgesehen ist, in die der Schaltfinger in einer Basis-Axialposition der Mutter eingreift und innerhalb der der Schaltfinger verdrehbar ist, und wobei an dem Gehäuse eine Axialführung vorgesehen ist, die sich axial an die Radialnut anschließt und in die der Schaltfinger eingreifen kann, um die Mutter in Umfangsrichtung zu halten, so dass diese bei einer Drehung der Spindel in einer ersten Axialrichtung versetzt wird, und wobei die Mutter zumindest während eines Abschnittes des Axialversatzes mit der Schaltstange gekoppelt ist, so dass durch Verdrehen der Spindel eine mit der Schaltstange gekoppelte Schaltkupplung betätigbar ist.

Ferner wird die Kopplung zwischen der Mutter und der Schaltstange dadurch gebildet, dass die Mutter an einer Stirnseite der Schaltstange anliegt, so dass die Mutter Axialkräfte in der ersten Axialrichtung auf die Schaltstange übertragen kann, um die der Schaltkupplung zugeordnete Gangstufe einzulegen.

Diese Schaltanordnung eignet sich in gleicher Weise zum Betätigen einer Parksperrenanordnung (bspw. als Park-by-Wire-Parksperre) oder einer anderen durch eine Axialbewegung zu betätigende Komponente innerhalb eines Kraftfahrzeuggetriebes.

In entsprechender Weise wird die obige Aufgabe gelöst durch ein Verfahren zum Betätigen einer Schaltkupplung oder einer Parksperrenanordnung mittels einer Schaltanordnung eines Kraftfahrzeuggetriebes gemäß dem Anspruch 14, insbesondere einer Schaltanordnung der erfindungsgemäßen Art, wobei die Schaltanordnung einen Spindeltrieb mit einer Spindel und einer Mutter aufweist, wobei die Mutter zur Ausübung einer axialen Betätigungskraft axial gegen eine Schaltstange gedrückt wird, indem die Spindel verdreht und die Mutter in Umfangsrichtung gehalten wird.

Bei der erfindungsgemäßen Schaltanordnung ist es möglich, die wenigstens eine Gangstufe und ggf. eine Mehrzahl von Gangstufen mittels nur eines Schaltmotors ein- und auszulegen, der dazu ausgebildet ist, die Spindel um die Spindelachse zu verdrehen. Der Schaltmotor kann beispielsweise ein Elektromotor sein, der sich auf einfache Weise ansteuern lässt.

Die Spindel und die Mutter bilden einen Spindeltrieb, der beispielsweise durch eine herkömmliche Schraube und eine Mutter gebildet sein kann, jedoch auch durch einen Kugelgewindetrieb gebildet sein kann.

Die Schaltstange ist vorzugsweise entlang einer Schaltachse an dem Gehäuse beweglich gelagert, die parallel zu der Spindelachse ausgerichtet ist. Ferner ist die Schaltachse vorzugsweise parallel zu Wellen des Kraftfahrzeuggetriebes angeordnet.

Ferner ist es bevorzugt, dass an dem Gehäuse eine Mehrzahl von Schaltstangen parallel zueinander beweglich gelagert ist, die um die Spindelachse herum verteilt angeordnet sind. Jeder der Schaltstangen ist in diesem Fall eine Axialführung zugeordnet, die mit der einen an dem Gehäuse vorgesehenen Radialnut (die als Teil- oder Vollumfangsnut ausgebildet sein kann) axial verbunden ist. Hierdurch ist es möglich, durch Verdrehen des Schaltfingers innerhalb der Radialnut einen Wählvorgang durchzuführen, bei dem der Schaltfinger (der auch als Schaltnocken bezeichnet werden kann) mit einer Ziel-Schaltstange ausgerichtet wird. Bei diesem Wählvorgang wird die Mutter vorzugsweise nicht in Umfangsrichtung festgehalten, so dass sie sich mit der Spindel mit dreht. Um dann die angewählte Schaltstange axial zu betätigen, wird die Mutter in Umfangsrichtung festgehalten, so dass sie bei geeigneter Drehrichtung der Spindel in die Axialführung einfährt und dort in Umfangsrichtung gehalten wird, um auf diese Weise die Schaltstange in der ersten Axialrichtung zu betätigen.

Der Grundgedanke der vorliegenden Erfindung besteht folglich darin, die Wähl- und die Schaltfunktion einer Schaltanordnung für ein Kraftfahrzeuggetriebe dadurch zu realisieren, dass bei einem Spindeltrieb die Mutter entweder an einer Verdrehung gegenüber der Spindel blockiert wird, um so eine axiale Bewegung der Mutter auf der Spindel einzuleiten. Erfolgt hingegen keine Blockierung der Mutter gegenüber einer Verdrehung an der Spindel, oder erfolgt sogar eine Blockierung (Fixierung) auf der Spindel, so dreht sich die Mutter mit der Spindel. Diese zwei Bewegungsarten können folglich für die Wähl- und die Schaltfunktion verwendet werden.

Ferner lässt sich die Schaltanordnung mit nur einem einzelnen Schaltmotor realisieren. Zudem kann die Schaltanordnung sowohl in axialer als auch in radialer Richtung besonders kompakt bauen, insbesondere deutlich kompakter als eine einzelne Schaltwalze, die eine Mehrzahl von Gangstufen zu betätigen hat.

Ferner können geringe Schaltzeiten realisiert werden. Zudem ergibt sich im Gegensatz zu einer Schaltanordnung mit einer einzelnen Schaltwalze eine weitgehend freie Schaltreihenfolge.

Insbesondere ist es auch möglich, mittels der Schaltanordnung zwei Gangstufen gleichzeitig einzulegen, so dass sich die Schaltanordnung insbesondere auch zur Verwendung in Kombination mit Doppelkupplungsgetrieben eignet.

Eine mittels einer solchen Schaltanordnung zu betätigende Parksperrenanordnung kann beispielsweise ein mit einer Welle verbundenes Parksperrenrad aufweisen, wobei an einem Gehäuse eine Parksperrenklinke verschwenkbar gelagert ist, die mittels eines Ziehkeils in eine Vertiefung des Parksperrenrades gedrückt werden kann. Die hierzu erforderliche axiale Betätigung dieses Ziehkeiles kann mittels der erfindungsgemäßen Schaltanordnung erfolgen. Dabei ist es auch möglich, in das Gehäuse neben einer Mehrzahl von Schaltstangen zum Betätigen von Schaltkupplungen eine Schaltstange zusätzlich bereitzustellen, die dem Ein- und Auslegen der Parksperrenanordnung zugeordnet ist.

Vorzugsweise wird die Drehposition der Mutter in der Basis-Axialposition, bei der der Schaltfinger innerhalb der Radialnut verdrehbar ist, mittels einer geeigneten Sensoranordnung gemessen. Die Sensoranordnung kann dabei beispielsweise einen Inkrementalsensor beinhalten und weist vorzugsweise zusätzlich einen Nullpunktsensor auf, so dass sich der Spindeltrieb auf einfache Art und Weise kalibrieren lässt, insbesondere nach einem Reset eines Steuergerätes. Dabei kann eine solche Kalibrierung folglich erfolgen, ohne dass hierbei Gangstufen eingelegt oder ausgelegt werden müssen, wie es bei einer Schaltwalze regelmäßig der Fall ist. Ferner ist es möglich, die Axialposition der Schaltstange bzw. der Schaltstangen jeweils zu erfassen, wozu ebenfalls geeignete Sensoranordnungen bereitgestellt sein können.

Die Aufgabe wird somit vollkommen gelöst.

Erfindungsgemäß wird die Kopplung zwischen der Mutter und der Schaltstange dadurch gebildet, dass die Mutter bei dem Axialversatz an der Schaltstange anliegt, an einer Stirnseite hiervon, so dass die Mutter Axialkräfte in der ersten Axialrichtung auf die Schaltstange übertragen kann, die hier also als Schubstange ausgebildet ist. Hierdurch kann die Kopplung konstruktiv besonders einfach realisiert werden.

In einer weiteren bevorzugten Ausführungsform ist die Schaltstange mittels einer Rückholeinrichtung in eine entgegengesetzte zweite Axialrichtung bewegbar.

Die Rückholeinrichtung kann auf vielfältige Art und Weise realisiert werden, beispielsweise auf rein mechanische oder auf elektromechanische Art und Weise. Durch die Rückholeinrichtung ist es möglich, dass die Mutter auf die Schaltstange ausschließlich eine Schubkraft ausüben muss, was die Gesamtkonstruktion wesentlich vereinfacht. Die Rückholeinrichtung kann in diesem Fall dafür sorgen, dass die Schaltstange wieder in eine axiale Ausgangsposition zurückbewegt wird.

Die Rückholeinrichtung könnte im einfachsten Fall eine elastische Einrichtung sein, die die Schaltstange gegen die erste Axialrichtung elastisch vorspannt. In diesem Fall könnte die elastische Vorspannung auch schaltbar ausgebildet sein.

Von besonderem Vorzug ist es jedoch, wenn die Rückholeinrichtung eine an dem Gehäuse beweglich gelagerte Rückholstange aufweist, die der Schaltstange zugeordnet ist, und eine an dem Gehäuse vorgesehene weitere Axialführung aufweist, die sich in axialer Richtung an die Radialnut anschließt und in die der Schaltfinger eingreifen kann, um die Mutter in Umfangsrichtung zu halten, so dass diese bei einer Drehung der Spindel axial versetzt wird, wobei die Mutter zumindest während eines Abschnittes dieses Axialversatzes mit der Rückholstange gekoppelt ist, so dass die Rückholstange in der ersten Schaltrichtung versetzt wird, und wobei die Rückholstange so mit der Schaltstange gekoppelt ist, dass der Axialversatz der Rückholstange in der ersten Axialrichtung zu einer Bewegung der Schaltstange in der zweiten Axialrichtung führt.

Bei dieser Ausführungsform kann die Rückholeinrichtung rein mechanisch ausgebildet werden, was den Gesamtaufbau wesentlich vereinfacht. Ferner ist es hierbei möglich, dass die Mutter jeweils nur Schubbewegungen gegen die Schaltstange oder die Rückholstange ausüben muss, so dass eine Vor- und Zurückfahren der Mutter entlang der zugehörigen Axialführungen auf einfache Weise durch Umkehren der Drehrichtung der Spindel realisierbar ist.

Die Kopplung zwischen der Schaltstange und der Rückholstange ist dabei vorzugsweise so, dass die Rückholstange bei einer Bewegung der Schaltstange in der ersten Axialrichtung in die zweite Axialrichtung versetzt wird, so dass die Mutter vorzugsweise sofort beim Einfahren in die weitere Axialführung die Rückholstange in die erste Axialrichtung versetzen kann, um die Schaltstange dann wieder zurückzuführen.

Die Schaltstange und die Rückholstange können dabei als reine Schubstangen ausgebildet sein. Die Kopplung ist vorzugsweise als mechanische Zwangskopplung ausgeführt.

Generell ist es möglich, dass die Rückholstange ebenfalls eine Komponente in dem Kraftfahrzeuggetriebe betätigt. Von besonderem Vorzug ist es jedoch, wenn die Rückholstange zumindest mit keiner Schaltkupplung gekoppelt ist.

Von besonderem Vorzug ist es hierbei, wenn die Schaltstange und die Rückholstange über einen zweiseitigen Hebel miteinander gekoppelt sind.

Der Hebel kann dabei in einer mittleren Position, die vorzugsweise auf der Spindelachse liegt, verschwenkbar an dem Gehäuse gelagert sein. Ferner können hierbei die Enden des zweiseitigen Hebels gelenkig mit der Schaltstange bzw. mit der Rückholstange gekoppelt sein. Anstelle der Kopplung über einen zweiseitigen Hebel ist es beispielsweise auch möglich, die hierdurch realisierbare Funktion dadurch einzurichten, dass die Schaltstange und die Rückholstange jeweils als Zahnstangen ausgebildet sind, wobei ein Zahnrad bzw. Ritzel dazwischen angeordnet ist.

In einer alternativen Ausführungsform, die ggf. auch zusätzlich vorgesehen werden kann, weist die Rückholeinrichtung eine weitere Axialführung auf, die sich in axialer Richtung an die Radialnut anschließt und in die der Schaltfinger eingreifen kann, um die Mutter in Umfangsrichtung zu halten, so dass diese bei einer Drehung der Spindel in der ersten Axialrichtung axial versetzt wird, und eine weitere Radialnut aufweist, die sich in axialer Richtung am entgegengesetzten Ende an die weitere Axialführung anschließt, so dass der Schaltfinger von dem entgegengesetzten Ende in die der Schaltstange zugeordnete Axialführung eingreifen kann, um die Schaltstange in die entgegengesetzte zweite Axialrichtung zu bewegen.

Der Grundgedanke bei dieser Art von Rückholeinrichtung ist jener, dass für den Wechsel der Mutter zwischen der einen Radialnut und der weiteren Radialnut an dem Gehäuse eine weitere Axialführung vorgesehen wird, die nach der Art einer "Leergasse" ausgebildet ist. Der Schaltfinger kann folglich durch diese Leergasse hindurchgeführt werden, um die Position der Mutter von der ersten Radialnut in die weitere Radialnut bzw. umgekehrt zu überführen.

Ferner ist es gemäß einer weiteren bevorzugten Ausführungsform möglich, die Rückholeinrichtung mit einer lösbaren Kupplung zwischen der Mutter und der Schaltstange auszustatten.

Eine derartige lösbare Kupplung kann beispielsweise als mechanische Kupplung oder als elektromagnetische Kupplung oder dergleichen ausgebildet sein.

Insgesamt ist es ferner vorteilhaft, wenn der Radialnut ein Anschlag zugeordnet ist, gegen den die Mutter in einer der ersten Axialrichtung entgegengesetzten zweiten Axialrichtung anschlägt, um eine Verdrehung des Schaltfingers in der Radialnut zu erzwingen.

Generell kann vorgesehen sein, dass die Mutter sich alleine aufgrund von Reibung oder dergleichen auf der axialen Höhe der Radialnut mit der Spindel mitdreht. Vorzugsweise wird jedoch zum Erzwingen der Drehbewegung der Mutter ein Anschlag vorgesehen, der die Mutter axial hält, so dass diese zwangsweise verdreht wird.

Der Anschlag ist dabei vorzugsweise an der Spindel angeordnet. Hierdurch kann ein Mitdrehen der Mutter beim Wählvorgang ohne Reibung am Gehäuse realisiert werden.

Alternativ ist der Anschlag an dem Gehäuse ausgebildet. Bei dieser Variante kann insbesondere ein "Festziehen" der Mutter an einem mit der Spindel verbundenen Anschlag verhindert werden, wobei ggf. ein Axiallager das Festziehen der Mutter am Anschlag verhindern bzw. das Lösen vereinfachen kann.

Ferner ist ein derartiger Anschlag konstruktiv einfach zu realisieren.

Dabei ist es von besonderem Vorteil, wenn dem Anschlag eine Freilaufeinrichtung zugeordnet ist, die eine Verdrehung der Mutter in einer ersten Drehrichtung zulässt und eine Verdrehung in der anderen Drehrichtung in wenigstens einer vorbestimmten Drehposition sperrt.

Durch diese Maßnahme ist es möglich, die Mutter in der zweiten Axialrichtung gegen den Anschlag zu fahren, wobei die Mutter dann anschließend zwangsweise verdreht wird, und zwar gemeinsam mit der Spindel. Eine Verdrehung der Mutter in dieser Drehrichtung ist mittels der Freilaufeinrichtung dabei möglich. Ferner ist vorgesehen, dass zumindest in einer vorbestimmten Drehposition eine Verdrehung in der anderen Drehrichtung nicht möglich ist. Sobald die Mutter diese vorbestimmte Drehposition erreicht hat, kann folglich die Drehrichtung der Spindel umgedreht werden, wodurch die Mutter mittels der Freilaufeinrichtung wiederum in Umfangsrichtung festgehalten wird und sich wiederum in der ersten Axialrichtung bewegt, um beispielsweise in eine Axialführung eingeführt zu werden.

Demzufolge ist es bevorzugt, wenn die vorbestimmte Drehposition einer Axialführung für den Schaltfinger zugeordnet ist.

Es versteht sich, dass die Freilaufeinrichtung bei Ausbildung der Schaltanordnung mit mehreren Schaltstangen und zugeordneten Axialführungen eine Verdrehung in der anderen Drehrichtung vorzugsweise in einer entsprechenden Anzahl von vorbestimmten Drehpositionen sperren kann.

Folglich ist es ebenfalls vorteilhaft, wenn die erste Drehrichtung jene Drehrichtung ist, mit der die Spindel verdreht wird, um die Mutter in der zweiten Axialrichtung zu bewegen.

Ferner ist es insgesamt vorteilhaft, wenn die Freilaufeinrichtung eine Freilaufkontur an der Mutter oder an dem Gehäuse sowie wenigstens einen auf die Freilaufkontur wirkenden Vorsprung an dem Gehäuse oder an der Mutter aufweist.

Die Freilaufkontur kann dabei beispielsweise einen Schrägkonturabschnitt und einen Sperrkonturabschnitt aufweisen, wobei der Sperrkonturabschnitt der vorbestimmten Drehposition zugeordnet ist.

Der Vorsprung ist dabei vorzugsweise in Richtung hin zu der Freilaufkontur elastisch vorgespannt, wobei der Vorsprung vorzugsweise mittels einer Kugel ausgebildet ist, nach der Art einer Kugelrasteinrichtung. Der Vorsprung kann jedoch auch auf eine andere Art und Weise realisiert bzw. ausgebildet sein.

Ferner ist es hierbei vorteilhaft, wenn die Freilaufkontur an einer axialen Stirnseite der Mutter ausgebildet ist, wobei der Vorsprung an dem Gehäuse gelagert ist und in axialer Richtung hin zu der Freilaufkontur elastisch vorgespannt ist.

Auf diese Weise lässt sich die Freilaufkontur vergleichsweise einfach realisieren und die Mutter kann konstruktiv ohne elastisch vorgespannte Elemente realisiert werden. Andererseits ist es an dem Gehäuse vergleichsweise einfach, elastisch vorgespannte Vorsprünge vorzusehen. Die Vorsprünge erstrecken sich dabei vorzugsweise in einer Grundposition gegenüber einer Anschlagfläche des Anschlags in axialer Richtung hinaus, so dass die Vorsprünge gemeinsam mit der Freilaufkontur an der jeweiligen vorbestimmten Drehposition eine Art Rasteinrichtung bilden.

Bei den oben beschriebenen Ausführungsformen von Schaltanordnungen wird generell davon ausgegangen, dass die Schaltstange und die Mutter unabhängig voneinander an dem Gehäuse gelagert sind, wobei die Mutter mittelbar über die Spindel an dem Gehäuse gelagert ist.

Insgesamt kann mit der erfindungsgemäßen Schaltanordnung bzw. dem erfindungsgemäßen Verfahren das Ziel erreicht werden, eine Schaltbetätigung insbesondere elektromotorisch mittels eines einzelnen Elektromotors zu realisieren. Die Schaltanordnung eignet sich insbesondere für Doppelkupplungsgetriebe. Ferner können geringe Schaltzeiten realisiert werden. Auch sind in weitem Umfang freie Schaltreihenfolgen realisierbar. Schließlich kann die Schaltanordnung äußerst kompakt realisiert werden, und zwar sowohl in radialer als auch in axialer Richtung, so dass sich nur geringe Packageanforderungen innerhalb des Getriebegehäuses ergeben. Die Schaltanordnung kann zudem kostengünstig hergestellt werden.

Generell ist es möglich, durch geeignete Verbindungen von Schaltstangen eines Teilgetriebes das Einlegen von mehr als einer Gangstufe in einem Teilgetriebe zu verhindern. Ferner kann eine derartige Gangverriegelung bei einem Getriebe, das nicht als Doppelkupplungsgetriebe ausgebildet ist, auch eine Gangverriegelung hinsichtlich sämtlicher Gangstufen des Getriebes erzielt werden, so dass nur eine einzelne Gangstufe einlegbar ist.

Ferner ist es generell möglich, Schaltstangen im gleichen Teilgetriebe beim Doppelkupplungsgetriebe während des Einlegens einer Gangstufe im gleichen Teilgetriebe in eine Neutralstellung zu bringen. Hierdurch ist das Auslegen eines Ganges im gleichen Teilgetriebe, aber auf einer anderen Schaltstange, nicht erforderlich, sondern erfolgt durch Betätigen der aktuell betätigten Schaltstange.

Während in den obigen Ausführungsformen generell davon ausgegangen wird, dass die Mutter die Schaltstange in axialer Richtung "drückt", versteht sich, dass bei geeigneter mechanischer Ausbildung auch ein "Ziehen" einer Schaltstufe möglich ist, um eine Bewegung der Schaltstange in der ersten Axialrichtung zu realisieren.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung, welche durch die Ansprüche definierts ist, zu verlassen.

Ausführungsbeispiele der Erfindung sind in der Zeichnung dargestellt und werden in der nachfolgenden Beschreibung näher erläutert. Es zeigen:
- Fig. 1: eine schematische Darstellung eines Kraftfahrzeug-Antriebsstranges mit einer schematisch dargestellten Ausführungsform einer erfindungsgemäßen Schaltanordnung;
- Fig. 2: eine schematische Darstellung entlang einer Schnittlinie II-II der Fig. 1;
- Fig. 3: eine der Fig. 1 vergleichbare Ansicht einer weiteren Ausführungsform einer erfindungsgemäßen Schaltanordnung;
- Fig. 4: eine schematische Schnittansicht entlang einer Linie IV-IV der Fig. 3;
- Fig. 5: eine schematische Darstellung einer Freilaufeinrichtung der Schaltanordnung der Fig. 3 und 4 in vergrößerter Form;
- Fig. 6: eine Abwicklung einer Schaltanordnung der in den Fig. 3 und 4 gezeigten Art, wobei sämtliche Schaltstangen in einer Neutralposition sind;
- Fig. 7: eine der Fig. 6 entsprechende Darstellung, wobei die Gangstufen 2 und 3 eingelegt sind;
- Fig. 8: eine schematische Draufsicht auf eine Freilaufkontur einer weiteren Ausführungsform einer Freilaufeinrichtung einer erfindungsgemäßen Schaltanordnung; und
- Fig. 9: eine schematische Darstellung eines Antriebsstranges in Form eines Zweiganggetriebes mit einem Beispiel einer nicht die Erfindung betreffenden Schaltanordnung.

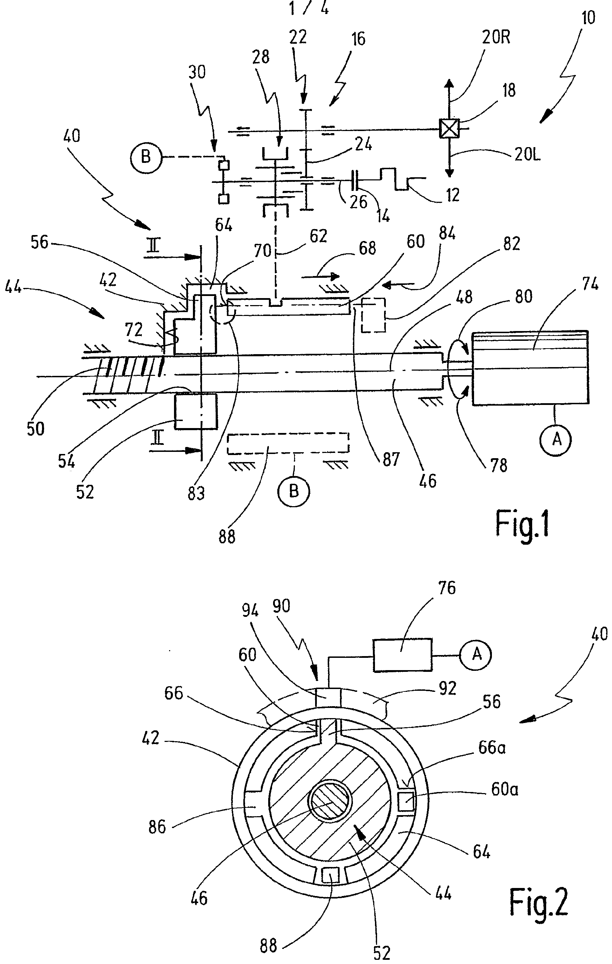

In den Fig. 1 und 2 ist ein Antriebsstrang für ein Kraftfahrzeug schematisch dargestellt und generell mit 10 bezeichnet. Der Antriebsstrang 10 beinhaltet einen Antriebsmotor 12 wie einen Verbrennungsmotor, dessen Antriebswelle mit einer Kupplungsanordnung 14 verbunden ist. Ein Ausgang der Kupplungsanordnung 14 ist mit einer Getriebeanordnung 16 verbunden. Ein Ausgang der Getriebeanordnung 16 ist mit einem Differential 18 verbunden, mittels dessen Antriebsleistung auf zwei angetriebene Räder 20L, 20R verteilt wird. Die Getriebeanordnung 16 ist vorliegend lediglich schematisch mit einer Eingangswelle und einer Ausgangswelle angedeutet, die durch einen Radsatz 22 miteinander verbunden sind. Bei der Getriebeanordnung 16 handelt es sich insbesondere um ein Stirnradgetriebe, insbesondere in Vorgelegebauweise. Die Getriebeanordnung 16 kann insbesondere ein automatisiertes Schaltgetriebe sein, vorzugsweise ein Doppelkupplungsgetriebe.

Der Radsatz 22 weist ein Losrad 24 auf, das an einer Welle 26 der Getriebeanordnung 16 drehbar gelagert ist. An der Welle 26 ist eine Schaltkupplung angeordnet, die herkömmlicher Bauart sein kann, beispielsweise als Klauenkupplung ausgebildet sein kann, insbesondere jedoch als Synchron-Schaltkupplung.

Die Schaltkupplung 28 weist eine nicht näher bezeichnete Schaltmuffe auf, die in axialer Richtung an der Welle 26 verschiebbar ist, um das Losrad 24 entweder drehfest mit der Welle 26 zu verbinden und auf diese Weise eine Gangstufe einzulegen, oder von der Welle 26 zu entkoppeln, um auf diese Weise die zugeordnete Gangstufe auszulegen. Getriebeanordnungen 16 dieser Art weisen in der Regel wenigstens eine Rückwärtsgangstufe und wenigstens fünf Vorwärtsgangstufen auf, die jeweils einem Radsatz zugeordnet sind und mittels einer entsprechenden Anzahl von Schaltkupplungen betätigbar sind.

In Fig. 1 ist ferner gezeigt, dass der Antriebsstrang 10 eine Parksperrenanordnung 30 aufweisen kann, die beispielsweise ein Parksperrenrad beinhaltet, das drehfest mit einer der Wellen (hier Welle 26) verbunden ist. Vorzugsweise ist ein solches Parksperrenrad an einer fest mit dem Differential 18 drehgekoppelten Welle angeordnet. Die Parksperrenanordnung 30 kann beispielsweise eine nicht näher dargestellte Parksperrenklinke aufweisen, die zwischen einer Freigabeposition und einer Parksperrenposition verschwenkbar ist, wobei in der Parksperrenposition ein Zahn der Parksperrenklinke in eine Vertiefung des Parksperrenrades eingreift. Zum Betätigen der Parksperrenklinke kann ein linear versetzbares Betätigungsglied vorgesehen sein.

Zum automatisierten Betätigen der Schaltkupplung 28 ist eine Schaltanordnung 40 vorgesehen, die beispielsweise in ein Gehäuse 42 der Getriebeanordnung 16 integriert sein kann. Die Schaltanordnung 40 beinhaltet einen Spindeltrieb 44, der eine Spindel 46 aufweist, die entlang einer Spindelachse 48 ausgerichtet ist und an ihrem Außenumfang zumindest abschnittsweise ein Spindelgewinde 50 aufweist. Die Spindelachse 48 ist vorzugsweise parallel zu der Welle 26 der Getriebeanordnung 16 ausgerichtet. Der Spindeltrieb 44 beinhaltet ferner eine Mutter 52 mit einem Muttergewinde 54, das mit dem Spindelgewinde 50 in Eingriff steht. Der Spindeltrieb 44 kann auch als Kugelumlaufspindeltrieb ausgebildet sein, der generell zu einer Verringerung der Reibung und damit zu einer Verringerung des erforderlichen Motormomentes eines Motors zum Antrieb der Spindel beitragen kann.

An einem Außenumfang der Mutter 52 ist ein radial vorstehender Schaltfinger 56 ausgebildet, der sich vorzugsweise über einen Winkelbereich von < 20° erstreckt. Die Spindel 46 ist an dem Gehäuse 42 drehbar gelagert.

Die Schaltanordnung 40 weist ferner eine Schaltstange 60 auf, die an dem Gehäuse 42 parallel zu der Spindelachse 48 versetzbar gelagert ist. Die Schaltstange 60 ist in radialer Richtung mit dem Schaltfinger 56 ausgerichtet. Ferner ist die Schaltstange 60 über eine geeignete Kopplung 62, beispielsweise in der Form einer Schaltgabel, mit der Schaltkupplung 28 gekoppelt. Axialbewegungen der Schaltstange 60 führen folglich zu einem axialen Bewegen der Schaltmuffe der Schaltkupplung 28, so dass mittels der Schaltstange 60 wenigstens eine Gangstufe ein- und auslegbar ist.

An dem Gehäuse 42 ist eine Radialnut 64 ausgebildet, in die der Schaltfinger 56 der Mutter 52 in einer Basis-Axialposition, die in Fig. 1 dargestellt ist, greift. In der Basis-Axialposition lässt sich die Mutter 52 folglich in Umfangsrichtung verdrehen, wie es beispielsweise in Fig. 2 zu erkennen ist. In den Fig. 1 und 2 ist die Mutter 52 so verdreht, dass der Schaltfinger 56 in Umfangsrichtung mit der Schaltstange 60 ausgerichtet ist.

An dem Gehäuse 42 ist ferner eine Axialführung 66 ausgebildet, die als eine Art Schaltfingergasse ausgebildet ist. Der Schaltfinger 56 kann folglich axial in die Axialführung 66 eindringen und wird in der Axialführung 66 in Umfangsrichtung gehalten. Die Axialführung 66 kann auch zur Lagerung der Schaltstange 60 dienen, und zwar in Umfangsrichtung. Eine Lagerung der Schaltstange 60 in Radialrichtung ist aus Übersichtlichkeitsgründen in den Fig. 1 und 2 nicht im Detail dargestellt. Die Umfangsrichtung ist vorzugsweise senkrecht zu der Axialrichtung ausgerichtet.

Sofern die dem Radsatz 22 zugeordnete Gangstufe eingelegt werden soll, wird zunächst die Spindel 46 so verdreht, dass die in der Basis-Axialposition befindliche Mutter 52 verdreht wird, bis der Schaltfinger 56 mit der Axialführung 66 in Umfangsrichtung ausgerichtet ist, wie es in Fig. 1 und 2 dargestellt ist. Durch Halten der Mutter 52 in Umfangsrichtung wird die Mutter in die Axialführung 66 eingeführt, indem die Spindel 46 mit einer geeigneten Drehrichtung angetrieben wird. Sobald der Schaltfinger 56 in der Axialführung 66 eingreift, wird die Mutter 52 von der Axialführung 66 in Umfangsrichtung gehalten und wird folglich zwangsweise in einer ersten Axialrichtung 68 in Richtung auf die Schaltstange 60 zu versetzt, bis der Schaltfinger 56 an der Schaltstange 60 anschlägt und diese in der ersten Axialrichtung 68 mitnimmt, um auf diese Weise die Schaltkupplung 28 zu betätigen. Zu diesem Zweck ist an einer axialen Stirnseite der Schaltstange 60 eine Anlagefläche 70 ausgebildet, an der der Schaltfinger 56 angreift.

Das Gehäuse 42 weist ferner einen Axialanschlag 72 für die Mutter 52 auf, wobei der Axialanschlag 72 die Basis-Axialposition definiert. Wenn die Mutter 52 folglich nach dem Versetzen der Schaltstange 60 in die entgegengesetzte Axialrichtung bewegt wird, und zwar durch Antreiben der Spindel in der entgegengesetzten Richtung, tritt der Schaltfinger 56 schließlich aus der Axialführung 66 aus, und die Mutter kommt anschließend in Anlage an die Anlagefläche 70, so dass die Mutter in der Basis-Axialposition durch Verdrehen der Spindel 46 verdreht werden kann, wobei der Schaltfinger 56 die Radialnut 64 durchläuft.

In Fig. 2 ist dargestellt, dass an dem Gehäuse 42 in Umfangsrichtung verteilt eine Mehrzahl von Schaltstangen 60 angeordnet sein kann (hier Schaltstangen 60 und 60a). Der Schaltstange 60a ist eine entsprechende Axialführung 66a zugeordnet. Nach einem Verdrehen der Mutter 52 so, dass der Schaltfinger 56 mit der Schaltstange 60a ausgerichtet ist, kann auch diese in axialer Richtung versetzt werden, um eine Gangstufe einzulegen, die der weiteren Schaltstange 60a zugeordnet ist.

Typischerweise ist eine Schaltstange 60 jeweils einer Schaltmuffe zugeordnet, die eine oder zwei Schaltkupplungen eines Schaltkupplungspaketes betätigen kann, wie es im Stand der Technik bekannt ist. Für jeweils zwei Gangstufen ist folglich vorzugsweise jeweils eine eigene Schaltstange 60, 60a, ... vorzusehen.

Fig. 1 zeigt einen Schaltmotor 74, der beispielsweise als Elektromotor ausgebildet sein kann und dessen Antriebswelle starr mit der Spindel 46 verbunden ist, wobei der Schaltmotor 74 mittels einer Steuereinrichtung 76 so angesteuert werden kann, dass dieser in einer ersten Drehrichtung 78 oder in einer zweiten Drehrichtung 80 angetrieben werden kann.

Um zu erreichen, dass die Mutter ausgehend aus der Basis-Axialposition in der ersten Axialrichtung 68 versetzt wird, bis der Schaltfinger 56 in eine Axialführung 66 eingreift, ist es in der Regel notwendig, die Mutter 52 in Umfangsrichtung zu fixieren. Hierzu kann eine in den Fig. 1 und 2 nicht näher dargestellte Halteeinrichtung vorgesehen werden, die beispielsweise als Rasteinrichtung ausgebildet sein kann. Die Halteeinrichtung ist vorzugsweise dazu ausgelegt, die Mutter 52 wenigstens solange in Umfangsrichtung ausgehend aus der Basis-Axialposition zu halten, bis der Schaltfinger 56 in die Axialführung 66 eingegriffen hat.

Aufgrund der Tatsache, dass ein Axialversatz der Schaltstange 60 ausschließlich über eine Schubkraft mittels des Schaltfingers 56 ausgeübt wird, ist vorzugsweise eine Rückholeinrichtung 82 vorgesehen, die in Fig. 1 schematisch angedeutet und dazu ausgelegt ist, die aus einer Neutralposition heraus in der ersten Axialrichtung versetzte Schaltstange in einer zweiten Axialrichtung 84 zu bewegen, die der ersten Axialrichtung 68 entgegengesetzt ist.

Mittels der Rückholeinrichtung 82 ist es folglich vorzugsweise auch möglich, die Schaltstange 60 aus einer Neutralposition, in der die Schaltkupplung 28 und ggf. eine dem gleichen Schaltkupplungspaket zugeordnete Schaltkupplung geöffnet ist, auch in die der ersten Axialrichtung 68 entgegengesetzte Axialrichtung 84 zu bewegen, um beispielsweise eine derartige zweite Schaltkupplung des gleichen Schaltkupplungspaketes zu betätigen.

Über die oben beschriebene Funktionsweise des Spindeltriebes 44 wird die Schaltstange 60 (oder weitere Schaltstangen 60a, etc.) folglich generell in der ersten Axialrichtung 68 bewegt. Mittels der Rückholeinrichtung 82 kann die Schaltstange (oder die Schaltstangen) jeweils in der entgegengesetzten zweiten Axialrichtung 84 bewegt werden. Die Rückholeinrichtung 82 kann folglich ausgehend von der oben beschriebenen Neutralposition auch dazu dienen, eine weitere Schaltkupplung des gleichen Schaltkupplungspaketes zu betätigen. Um aus dieser Position der Schaltstange 60 wieder die Neutralposition einzurichten, wird wiederum der Spindeltrieb 44 auf die oben beschriebene Art und Weise betätigt, um die Schaltstange 60 aus dieser zweiten Schaltposition wieder in die Neutralposition zurückzuführen (in der ersten Axialrichtung).

Die Rückholeinrichtung 82 kann beispielsweise durch eine lösbare Kupplung 83 zwischen der Mutter 52 und der Schaltstange 60 gebildet sein, wie es in Fig. 1 schematisch angedeutet ist.

Ferner kann eine Rückholeinrichtung 82 realisiert werden, indem an dem Gehäuse 42 eine weitere Axialführung 86 vorgesehen wird, der jedoch keine Schaltstange zugeordnet ist, die folglich als axiale "Leergasse" ausgebildet ist. Durch Verdrehen der Mutter 52 so, dass der Schaltfinger 56 mit dieser weiteren Axialführung 86 ausgerichtet wird, und durch Verdrehen der Spindel so, dass der Schaltfinger 86 die weitere Axialführung 86 in axialer Richtung durchfährt, kann die Mutter 52 folglich auf die der Basis-Axialposition entgegengesetzte axiale Seite der Schaltstange 60 bewegt werden. Folglich ist an dieser entgegengesetzten Position vorzugsweise eine weitere Radialnut 87 für den Schaltfinger 56 vorgesehen, was in Fig. 1 schematisch angedeutet ist. Innerhalb der weiteren Radialnut 87 kann der Schaltfinger 56 folglich in Umfangsrichtung verdreht werden, um den Schaltfinger beispielsweise mit der Axialführung 66 auszurichten. Durch geeigneten Antrieb der Spindel kann der Schaltfinger dann von der entgegengesetzten Seite in die Axialführung 66 eingreifen und die Schaltstange 60 wiederum im Schubbetrieb in der zweiten Axialrichtung 84 bewegen. Anschließend kann die Mutter wieder in der ersten Axialrichtung 68 zurückbewegt werden, hin zu der weiteren Radialnut 87. Anschließend kann die Mutter 52 wieder verdreht werden, bis der Schaltfinger 56 mit der weiteren Axialführung 86 ausgerichtet ist, um anschließend die Mutter in der zweiten Axialrichtung 84 wieder in Richtung hin zu der ersten Basis-Axialposition zu bewegen, die in Fig. 1 und 2 dargestellt ist.

Auf diese Weise kann jede Schaltstange 60, 60a ausschließlich im Schubbetrieb sowohl in der ersten als auch in der zweiten Axialrichtung 68, 84 betätigt werden, so dass sämtliche Schaltstangen 60, 60a, etc. in beiden Axialrichtungen 68, 84 bewegbar sind, um auf diese Weise eine oder mehrere Gangstufen der Getriebeanordnung 16 einzulegen. Es ist insbesondere möglich, bei Ausbildung der Getriebeanordnung 16 durch ein Doppelkupplungsgetriebe, in beiden Teilgetrieben jeweils eine Gangstufe einzulegen, ohne dass es notwendig ist, zwischenzeitlich andere Gangstufen einzulegen, wie es bei einer sequenziellen Schaltwalze regelmäßig der Fall ist.

Insgesamt können so sehr kurze Schaltzeiten erzielt werden.

Es versteht sich, dass eine Steigung des Spindelgewindes 50 und des Muttergewindes 54 so eingerichtet ist, dass zum einen Axialkräfte auf die Schaltstange übertragbar sind, die zum Ein- und Auslegen der Gangstufen notwendig sind. Andererseits sind die Steigungen so eingerichtet, dass die Mutter in axialer Richtung vergleichsweise schnell betätigt werden kann, wozu die Drehzahl des Schaltmotors 74 in geeigneter Weise einstellbar ist.

Es versteht sich, dass die Steuereinrichtung 76 dazu ausgelegt ist, den Schaltmotor sowohl hinsichtlich der Drehposition als auch hinsichtlich der Drehgeschwindigkeit in beliebiger Art und Weise anzusteuern, um die obigen Funktionen realisieren zu können.

Bei Bereitstellen der weiteren Radialnut 87 versteht sich, dass an dem Gehäuse 42 vorzugsweise ein entsprechender Axialanschlag vorgesehen ist, der dem Axialanschlag 72 der Basis-Axialposition axial gegenüberliegt. Ferner ist eine Halteeinrichtung zum Halten der Mutter im Bereich der weiteren Radialnut ebenfalls vorgesehen, um die Mutter bei geeigneter Drehposition in eine der Axialführungen einfädeln zu können.

In Fig. 1 und 2 ist ferner schematisch dargestellt, dass an dem Gehäuse 42 eine Parksperrenschaltstange 88 vorgesehen sein kann. Die Parksperrenschaltstange 88 kann in gleicher Weise ausgebildet und betätigbar sein, wie jede der Schaltstangen 60. Die Parksperrenschaltstange 88 ist dabei, wie es in Fig. 1 schematisch angedeutet ist, mit der Parksperrenanordnung 30 gekoppelt, so dass die Schaltanordnung auch dazu verwendet werden kann, um die Parksperrenanordnung 30 zwischen einer Parksperrenposition und einer Freigabeposition hin- und herzuschalten.

In einer alternativen Varianten weist die Schaltanordnung 40 vorzugsweise nur eine solche Parksperrenschaltstange 88 auf und keine Schaltstangen, so dass die Schaltanordnung 40 ausschließlich zum Betätigen der Parksperrenanordnung ausgelegt ist.

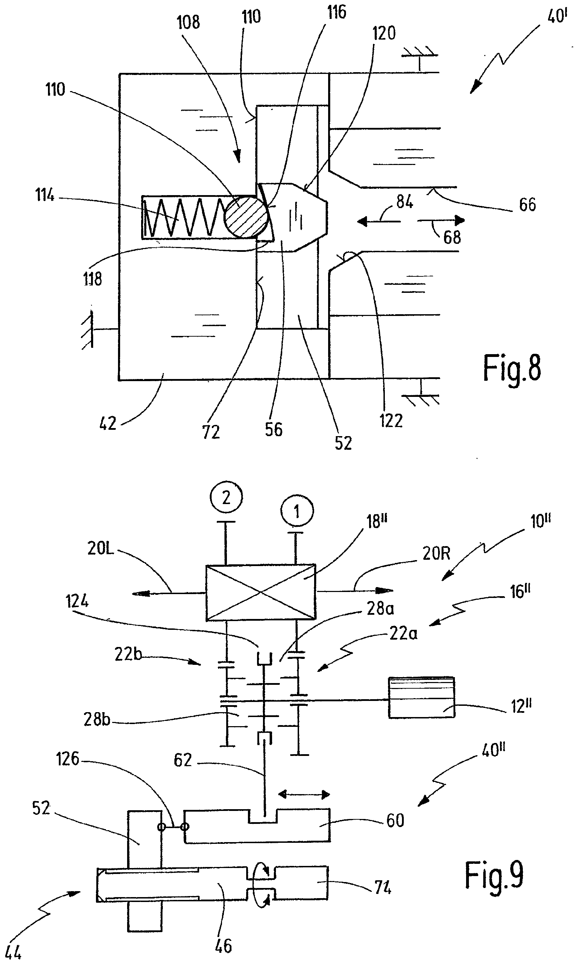

In diesem Fall kann die Schaltanordnung jedoch auch aufgebaut sein, wie es nachstehend noch in Bezug auf Fig. 9 beschrieben werden wird.

Die Schaltanordnung 40 weist vorzugsweise einen Inkrementalsensor 92 auf, mittels dessen die relative Drehlage des Schaltfingers 56 in Bezug auf das Gehäuse 42 erfassbar ist. Der Inkrementalsensor 92 ist dabei mit der Steuereinrichtung 76 verbunden. Ferner ist es vorzugsweise vorgesehen, in einer Umfangsposition einen Nullpositionssensor 94 vorzusehen, mittels dessen eine vorbestimmte Position des Schaltfingers 56 in Umfangsrichtung bestimmbar ist. Auch der Nullpositionssensor 94 ist vorzugsweise mit der Steuereinrichtung 76 verbunden. Anstelle des Inkrementalsensors 92, der an dem Gehäuse 42 angeordnet ist, kann auch eine Logik verwendet werden, die einen Inkrementalsensor des Schaltmotors 74 verwendet, um Rückschlüsse auf die jeweilige aktuelle Drehposition der Mutter 52 zu ermöglichen.

Der Nullpositionssensor 94 dient insbesondere zum Erfassen einer Nullposition, um auf diese Weise einen Inkrementalsensor zu kalibrieren, und zwar insbesondere nach einem Reset.

Bei einem Reset des Steuergerätes 76 kann die Mutter 52 in die Basis-Axialposition verbracht werden, ohne dass hierzu Gangstufen ein- oder ausgelegt werden müssen. Anschließend kann die Mutter 52 verdreht werden, bis der Nullpositionssensor 94 die vorbestimmte Drehposition der Mutter 52 erfasst, um auf diese Weise einen Inkrementalsensor zu kalibrieren.

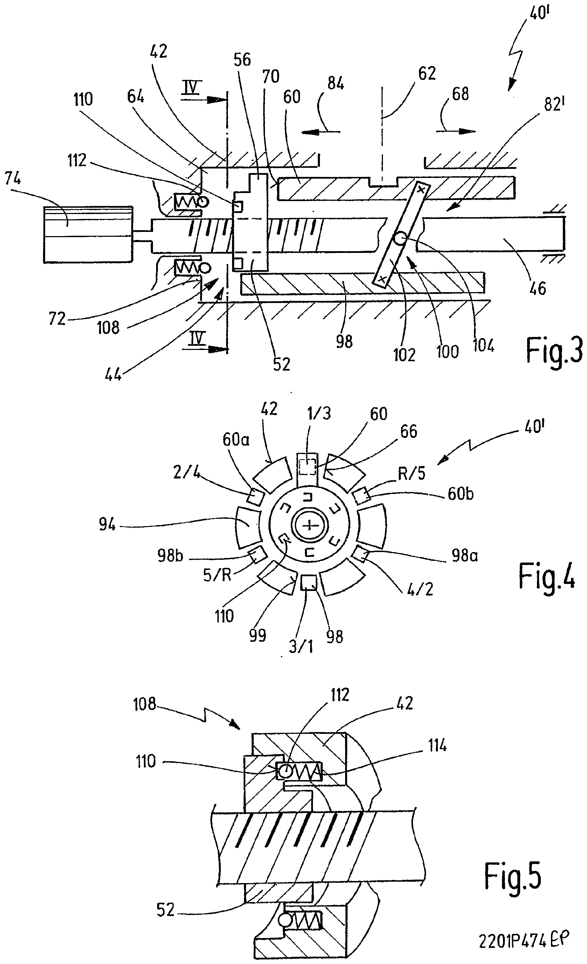

In den Fig. 3 bis 8 ist eine weitere Ausführungsform einer erfindungsgemäßen Schaltanordnung gezeigt, die hinsichtlich Aufbau und Funktionsweise generell der Schaltanordnung der Fig. 1 und 2 entspricht und die in diesen Figuren mit 40' bezeichnet ist. Gleiche Elemente sind mit gleichen Bezugsziffern gekennzeichnet. Im Folgenden werden im Wesentlichen die Unterschiede erläutert.

Die Schaltanordnung 40' weist eine weitere Art von Rückholeinrichtung 82' auf, die eine Rückholstange 98 beinhaltet. Die Rückholstange 98 ist generell aufgebaut wie eine Schaltstange 60 und ist in einer weiteren Axialführung 99 axial verschieblich an dem Gehäuse 42 gelagert. Die Rückholstange 98 ist in direkter Zuordnung zu der Schaltstange 60 vorgesehen. Fig. 4 zeigt neben der einen Schaltstange 60 zwei weitere Schaltstangen 60a, 60b. Jede dieser Schaltstangen 60, 60a, 60b ist eine Rückholstange 98, 98a, 98b zugeordnet. Die Rückholstangen 98 sind vorzugsweise diametral zu den zugeordneten Schaltstangen 60 angeordnet, also auf radial gegenüberliegenden Seiten der Mutter 52, wie es insbesondere in Fig. 4 zu sehen ist.

In der Ausführungsform der Fig. 3 bis 8 ist die Schaltstange 60 den Gangstufen 1, 3 einer Getriebeanordnung 16 zugeordnet, die insbesondere als Doppelkupplungsgetriebe ausgebildet sein kann. Die Schaltstange 60a ist den Gangstufen 2, 4 zugeordnet, und die Schaltstange 60b ist den Gangstufen R, 5 zugeordnet. Die Schaltanordnung 40' eignet sich folglich für ein Fahrzeuggetriebe mit fünf Vorwärtsgangstufen und einer Rückwärtsgangstufe. Bei einem Getriebe mit sechs oder sieben Gangstufen wäre folglich eine weitere Schaltstange in Umfangsrichtung vorzusehen, bei einem Getriebe mit noch mehr Gangstufen entsprechend weitere Schaltstangen.

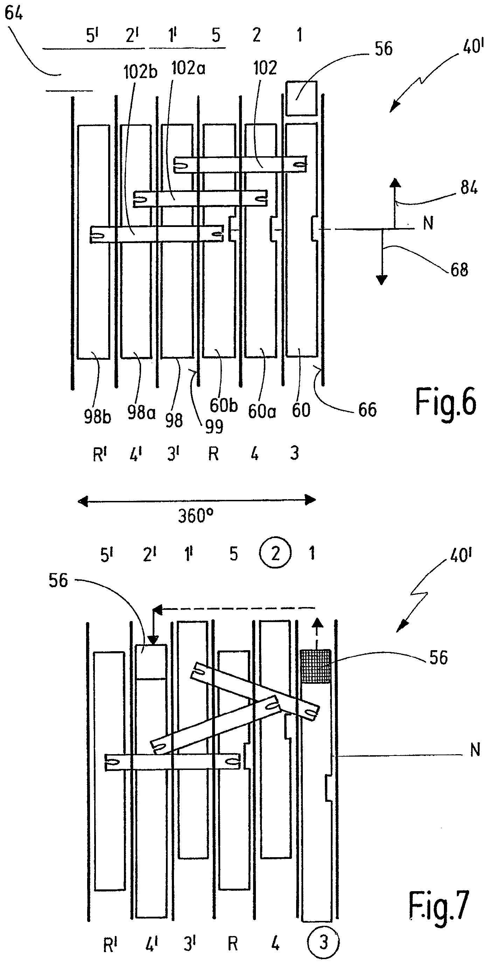

Die Schaltstangen 60, 60a, 60b sind mit ihren jeweils zugeordneten Rückholstangen 98, 98a, 98b über jeweilige Rückholkoppeleinrichtung 100 gekoppelt. Die Rückholkoppeleinrichtungen 100, von denen in Fig. 3 nur eine dargestellt ist, sind so ausgebildet, dass die Schaltstange 60 und die Rückholstange 98 jeweils in axialer Richtung gegenläufig versetzt werden, derart, dass die Rückholstange 98 in der zweiten Axialrichtung 84 versetzt wird, wenn die Schaltstange 60 in der ersten Axialrichtung 68 versetzt wird, und umgekehrt. Die Rückholkoppeleinrichtung 100 ist folglich eine Art Gegentakt-Zwangskopplung. Vorliegend ist die Rückholkoppeleinrichtung 100 mittels eines Hebels 102 realisiert, der sich im Wesentlichen in radialer Richtung erstreckt und an dem Gehäuse 42 verdrehbar ist, und zwar vorzugsweise an einem Anlenkungspunkt 104, der auf der Spindelachse 48 liegt. Die zwei Enden des Hebels 104 sind jeweils gelenkig mit der Schaltstange 60 bzw. der zugeordneten Rückholstange 98 verbunden. Weitere Hebel 102, die beispielsweise in den Fig. 6 und 7 bei 102a und 102b gezeigt sind, können in axialer Richtung versetzt gegenüber dem Hebel 102 an dem Gehäuse 42 gelagert sein.

Bei der Rückholeinrichtung 82' der Fig. 3 bis 8 lässt sich die Schaltstange 60 dadurch in der zweiten Axialrichtung 84 bewegen und folglich aus einer in erster Schaltrichtung 68 versetzten Position zurückbewegen bzw. rückholen, indem die Mutter 52 wiederum in die Basis-Axialposition versetzt und anschließend verdreht wird, bis der Schaltfinger 56 mit der zugeordneten Rückholstange 98 ausgerichtet ist. Anschließend wird die Rückholstange 98 in der ersten Axialrichtung 68 versetzt, wodurch die Schaltstange 60 zwangsweise in der zweiten Axialrichtung 84 versetzt wird.

Es versteht sich, dass hierdurch für die Schaltstange 60 sowohl eine Neutralposition eingerichtet werden kann, als auch zwei Schaltpositionen, die einer ersten Gangstufe und einer zweiten Gangstufe zugeordnet sind, die mittels eines Schaltkupplungspaketes betätigbar sind.

Dies ist beispielhaft in den Fig. 6 und 7 gezeigt, wobei Fig. 6 eine Darstellung zeigt, bei der sämtliche Schaltstangen 60, 60a, 60b jeweils in ihrer Neutralposition N ausgerichtet sind. In der Darstellung der Fig. 6 befindet sich der Schaltfinger 56 in der Axialführung 66.

Ausgehend von dieser Grundstellung kann der Schaltfinger 56 in der ersten Axialrichtung 68 bewegt werden, indem die Spindel 46 in geeigneter Richtung (abhängig von der Steigung des Spindelgewindes 50) angetrieben wird, wodurch die Schaltstange 60 in der ersten Axialrichtung mitgenommen wird, um auf diese Weise die Gangstufe 3 einzulegen, was in Fig. 7 dargestellt ist. Hierdurch wird die zugeordnete Rückholstange 98 in der zweiten Axialrichtung 84 versetzt, was ebenfalls in Fig. 7 dargestellt ist, wodurch der Hebel 102 verschwenkt wird.

Anschließend kann, wie es in Fig. 7 gestrichelt dargestellt ist, die Mutter 52 durch Umkehren der Drehrichtung der Spindel zurückversetzt werden, und zwar in der zweiten Axialrichtung 84. Die Schaltstange 60 verbleibt dabei in der Position, bei der die Gangstufe 3 eingelegt ist.

Anschließend kann die Mutter 52 nach Erreichen der Basis-Axialposition (entsprechend der Radialnut 64, die in Fig. 6 angedeutet ist) in Umfangsrichtung versetzt werden, bis der Schaltfinger 56 mit der Rückholstange 98a ausgerichtet ist. Anschließend wird die Spindel 46 wieder so angetrieben, dass die Mutter 52 in der ersten Axialrichtung versetzt wird, wodurch der Schaltfinger 56 in die der Rückholstange 98a zugeordnete Axialführung einfährt, die in Fig. 7 nicht näher bezeichnet ist. Hierdurch wird die Rückholstange 98a in der ersten Axialrichtung 68 versetzt, wodurch zwangsläufig mittels des Hebels 102a die Schaltstange 60a in der zweiten Axialrichtung 84 versetzt wird, wodurch die Gangstufe 2 eingelegt wird, wie es in Fig. 7 dargestellt ist.

In dem Doppelkupplungsgetriebe kann folglich bei eingelegter Gangstufe 3 im aktiven Teilgetriebe bereits die Gangstufe 2 vorgewählt werden, um sich auf einen Rückschaltvorgang vorzubereiten. Alternativ hätte auch die Schaltstange 60a in der ersten Axialrichtung 68 versetzt werden können, um die Gangstufe 4 in dem inaktiven Teilgetriebe vorzuwählen und einen Hochschaltvorgang vorzubereiten.

Ausgehend aus der Darstellung der Fig. 7 kann beispielsweise nach dem Übergeben der Antriebsleistung auf das der Gangstufe 2 zugeordnete Teilgetriebe die Gangstufe 3 wieder ausgelegt werden, indem der Schaltfinger 56 zunächst in die Basis-Axialposition zurückgefahren wird, anschließend verdreht wird und dann die Rückholstange 98 in der ersten Axialrichtung 68 versetzt, bis die Neutralposition erreicht ist. Anschließend kann die Neutralposition N beibehalten werden oder die Rückholstange 98 weiter bewegt werden, um die Gangstufe 1 einzulegen.

Bei der Ausführungsform der Schaltanordnung 40' der Fig. 3 bis 8 ist es folglich möglich, dass die Mutter ausschließlich in der Basis-Grundposition verdreht wird. Das Bereitstellen einer "Leergasse" 86 wie in der Fig. 2 ist hierbei nicht erforderlich. Die Schaltzeiten können hierdurch erheblich verkürzt werden.

Generell ist es möglich, die Schaltstangen und/oder die Hebel so miteinander zu koppeln, dass eine Gangverriegelung realisiert wird, die das Einlegen von mehreren Gangstufen in einem Teilgetriebe (im Falle eines Doppelkupplungsgetriebes) verhindert, oder die, (bei einem automatisierten Schaltgetriebe) das Einlegen sämtlicher anderer Gangstufen verhindert, wenn eine Gangstufe eingelegt ist. Konstruktive Details einer derartigen Gangverriegelung sind in den Fig. jedoch nicht dargestellt.

Ferner ist es generell denkbar, eine Neutralstellungseinrichtung einzurichten, die beim Einlegen einer Gangstufe in einem Teilgetriebe die anderen Schaltstangen, die dem gleichen Teilgetriebe zugeordnet sind, in eine Neutralposition verstellen. Hierdurch ist das Auslegen einer Gangstufe, die dem gleichen Teilgetriebe zugeordnet ist, jedoch einer anderen Schaltstange zugeordnet ist, nicht erforderlich, sondern erfolgt durch Betätigen der aktuellen Schaltstange.

Wie oben beschrieben, ist es zum Verdrehen der Mutter 52 in der Basis-Axialposition erforderlich, dass diese gegen einen Axialanschlag 72 anschlägt, der in axialer Richtung mit der Radialnut 64 ausgerichtet, bzw. dieser zugeordnet ist. Der Axialanschlag 72 ist vorzugsweise an dem Gehäuse 42 ausgebildet, könnte jedoch auch an der Spindel 46 ausgebildet sein.

Ferner wurde oben beschrieben, dass die Mutter 52 ausgehend aus der Basis-Axialposition zunächst gehalten werden muss, um diese in eine der Axialführungen 66, 99 einzufädeln.

Bei der Schaltanordnung 40' der Fig. 3 bis 8 erfolgt dies durch eine Freilaufeinrichtung 108, die als einseitige Rasteinrichtung ausgebildet ist.

Die Freilaufeinrichtung 108 ist hierbei zwischen der Mutter 52 und dem Gehäuse 42 eingerichtet und beinhaltet vorliegend eine Freilaufkontur 110 an einer axialen Stirnseite der Mutter 52, die dem Gehäuse zugewandt ist. Ferner beinhaltet die Freilaufeinrichtung 108 eine Mehrzahl von Vorsprüngen 112, die mittels jeweiliger Federn 114 in axialer Richtung in Richtung hin zu der Mutter 52 vorgespannt sind und in einer Grundposition in axialer Richtung gegenüber dem Axialanschlag 72 vorstehen. Dies ist insbesondere in den Fig. 5 und 8 in größerer Genauigkeit dargestellt. Die Vorsprünge 112 sind in Umfangsrichtung dabei so angeordnet, dass jeder Axialführung 66, 99 wenigstens ein Vorsprung 112 zugeordnet ist, vorzugsweise zwei diametral gegenüberliegende Vorsprünge, wie es in Fig. 3 und 5 dargestellt ist.

Die Freilaufkontur 110 weist hierbei einen Schrägkonturabschnitt 116 sowie einen Sperrkonturabschnitt 118 auf. Die Funktionsweise der Freilaufeinrichtung 108 ist insbesondere anhand der Fig. 8 deutlich erkennbar. Wenn die Mutter in axialer Richtung an dem Axialanschlag 72 anschlägt, wird die Mutter zwangsweise in Umfangsrichtung versetzt, wenn die Spindel weiter verdreht wird. Die Freilaufkontur 110 ist so ausgebildet, dass in dieser Drehrichtung, bei der die Spindel zunächst weiter in der der zweiten Axialrichtung 84 entsprechenden Drehrichtung verdreht wird, die Mutter 52 nach der Art eines Freilaufes über die Vorsprünge 112 hinwegfahren kann, und zwar aufgrund der Schrägkonturabschnitte 116. Um anschließend eine Richtungsumkehr der Mutter 52 in die erste Axialrichtung 68 zu erreichen, wird die Mutter 52 zunächst so verdreht, dass der Schaltfinger 56 einer Axialführung 66 zugeordnet ist. Anschließend wird die Spindel 46 in der entgegengesetzten Drehrichtung angetrieben. Hierdurch gelangt der Vorsprung 110, der vorzugsweise als Kugel ausgebildet ist, an den Sperrkonturabschnitt 118, so dass die Mutter 52 nicht in der entgegengesetzten Drehrichtung drehen kann und folglich in Umfangsrichtung festgehalten wird. Hierdurch wird die Mutter 52 zwangsweise in der ersten Axialrichtung 68 bewegt. Der Sperrkonturabschnitt 118 und die Vorspannung bzw. der Überstand der Vorsprünge 112 sind so gewählt, dass die Mutter 52 solange in Umfangsrichtung gehalten wird, bis der Schaltfinger 56 in die Axialführung 66 eingefädelt hat.

Um dies zu erleichtern, kann an dem axialen "Maul" der Axialführung 66 ein geeignetes Paar von Abschrägungen 122 vorgesehen sein, und in entsprechender Weise kann der Schaltfinger 56 auf der der Axialführung 66 zugewandten Seite mit geeigneten Abschrägungen 120 ausgebildet sein.

In Fig. 9 ist ein Beispiel eines nicht die Erfindung betreffenden Antriebsstranges 10" dargestellt. Der Antriebsstrang 10" weist einen Antriebsmotor 12" auf, der beispielsweise als Elektromotor ausgebildet sein kann. Die Getriebeanordnung 16" weist vorliegend genau zwei Gangstufen auf, die mittels zweier Radsätze 22a, 22b eingerichtet werden können, die mittels einer ersten Schaltkupplung 28a und einer zweiten Schaltkupplung 28b ein- und ausgelegt werden können, und zwar alternativ. Die Schaltkupplungen 28a, 28b sind in ein Schaltkupplungspaket integriert, das mittels einer einzelnen Schaltmuffe betätigbar ist, die über eine Koppeleinrichtung 62 mit einer Schaltstange 60 gekoppelt ist. Die Radsätze 22a, 22b können Festräder aufweisen, die mit einer weiteren Welle verbunden sind, oder direkt mit einem Eingangsglied eines Differenzials 18" verbunden sind, so dass das Getriebe vorliegend genau zwei Gangstufen aufweist.

Bei dieser Variante ist es möglich, dass so realisierte Schaltkupplungspakete 124 mittels nur einer Schaltstange 60 zu betätigen, die mittels eines Spindeltriebs 44 betätigt wird, der eine Spindel 46 und eine Mutter 52 aufweist, wie bei den obigen Ausführungsformen.

Im vorliegenden Fall ist es jedoch möglich, die Mutter 52 über eine starre Kopplung 126 mit der Schaltstange 60 zu koppeln, so dass über die starre Kopplung 126 sowohl Schub- als auch Zugkräfte auf die Schaltstange 60 übertragen werden können.

Eine derartige Ausgestaltung einer Schaltanordnung 40" eignet sich alternativ auch zum Ein- und Auslegen einer Parksperrenanordnung.

Insgesamt lässt sich mit der vorliegenden Erfindung je nach Ausführungsform wenigstens einer der folgenden Vorteile erzielen.

Eine Wähl- und eine Schaltfunktion können durch Erlauben/Erzwingen bzw. Verhindern eines Mitdrehens der Mutter mit der Spindel mittels nur eines einzelnen Antriebes realisiert werden. Die Schaltanordnung ist um Zusatzfunktionen wahlweise erweiterbar, wie z.B. eine Park-by-Wire-Parksperrenanordnung. Die Schaltanordnung kann sehr einfach und robust realisiert werden. Die Schaltanordnung lässt sich sehr gut in eine Getriebepackage integrieren. Ferner lässt sich die Schaltanordnung leicht für mehrere Gangstufen, also mehr als sechs Gangstufen oder mehr als sieben Gangstufen erweitern. Ferner lässt sich die Schaltanordnung ggf. einfach um Zusatzfunktionen (Park-By-Wire) erweitern.

Insgesamt ergibt sich eine einfache Herstellbarkeit, bei einer relative großen Anzahl von Gleichteilen. Die Gesamtstruktur des Getriebes kann gegenüber einer Ausführungsform, bei der die Gangstufen mittels einer Schaltwalze oder auf sonstige Art und Weise betätigt werden, unbeeinflusst bleiben.

Aufgrund der kompakten Bauweise ist es denkbar, die Schaltanordnung nahe an zu geordneten Schaltkupplungen anzuordnen und die Schaltgabeln bzw. Anlenkungen der Schaltgabeln sehr kurz auszuführen.

## Patentansprüche

1. Schaltanordnung (40) für ein Kraftfahrzeuggetriebe (16), das wenigstens eine Gangstufe aufweist, die mittels einer zugeordneten Schaltkupplung (28) einlegbar und auslegbar ist, mit
- einem Gehäuse (42),
- einer Spindel (46), die entlang einer Spindelachse (48) ausgerichtet ist, ein Spindelgewinde (50) aufweist und an dem Gehäuse (42) drehbar gelagert ist,
- einer Mutter (52), die ein Muttergewinde (54) aufweist, das mit dem Spindelgewinde (50) in Eingriff steht, wobei an der Mutter ein Schaltfinger (56) ausgebildet ist,
- wenigstens einer Schaltstange (60), die an dem Gehäuse (42) beweglich gelagert ist und die mit der Schaltkupplung (28) koppelbar ist,
- einer an dem Gehäuse (42) vorgesehenen Radialnut (64), in die der Schaltfinger in einer Basis-Axialposition der Mutter (52) eingreift und innerhalb der der Schaltfinger (56) verdrehbar ist, und
- einer an dem Gehäuse (42) vorgesehenen Axialführung (66), die sich axial an die Radialnut (64) anschließt und in die der Schaltfinger (56) eingreifen kann, um die Mutter (52) in Umfangsrichtung zu halten, so dass diese bei einer Drehung der Spindel in einer ersten Axialrichtung (68) axial versetzt wird,
wobei die Mutter (52) zumindest während eines Abschnittes des Axialversatzes mit der Schaltstange (60) gekoppelt ist, so dass durch Verdrehen der Spindel (46) eine mit der Schaltstange (60) gekoppelte Schaltkupplung (28) betätigbar ist, **dadurch gekennzeichnet, dass** die Kopplung zwischen der Mutter (52) und der Schaltstange (60) dadurch gebildet wird, dass die Mutter (52) an einer Stirnseite der Schaltstange (60) anliegt, so dass die Mutter Axialkräfte in der ersten Axialrichtung (68) auf die Schaltstange (60), die als Schubstange ausgebildet ist, übertragen kann, um die der Schaltkupplung (28) zugeordnete Gangstufe einzulegen.

2. Schaltanordnung nach Anspruch 1, **dadurch gekennzeichnet, dass** die Schaltstange (60) mittels einer Rückholeinrichtung (82) in eine entgegengesetzte zweite Axialrichtung (82) bewegbar ist.

3. Schaltanordnung nach Anspruch 2, **dadurch gekennzeichnet, dass** die Rückholeinrichtung (82) eine an dem Gehäuse beweglich gelagerte Rückholstange (98) aufweist, die der Schaltstange (60) zugeordnet ist, und eine an dem Gehäuse (42) vorgesehene weitere Axialführung (99) aufweist, die sich in axialer Richtung an die Radialnut (64) anschließt und in die der Schaltfinger (56) eingreifen kann, um die Mutter (52) in Umfangsrichtung zu halten, so dass diese bei einer Drehung der Spindel (46) axial versetzt wird, wobei die Mutter (52) zumindest während eines Abschnittes dieses Axialversatzes mit der Rückholstange (98) gekoppelt ist, so dass die Rückholstange (98) in der ersten Axialrichtung (68) versetzt wird, und wobei die Rückholstange (98) so mit der Schaltstange (60) gekoppelt ist, dass der Axialversatz der Rückholstange (98) in der ersten Axialrichtung (68) zu einer Bewegung der Schaltstange (60) in der zweiten Axialrichtung (82) führt.

4. Schaltanordnung nach Anspruch 3, **dadurch gekennzeichnet, dass** die Schaltstange (60) und die Rückholstange (98) über einen zweiseitigen Hebel (102) miteinander gekoppelt sind.

5. Schaltanordnung nach einem der Ansprüche 2 - 4, **dadurch gekennzeichnet, dass** die Rückholeinrichtung (82) eine weitere Axialführung (86) aufweist, die sich in axialer Richtung an die Radialnut (64) anschließt und in die der Schaltfinger (56) eingreifen kann, um die Mutter (52) in Umfangsrichtung zu halten, so dass diese bei einer Drehung der Spindel (46) in der ersten Axialrichtung (68) axial versetzt wird, und eine weitere Radialnut (87) aufweist, die sich in axialer Richtung am entgegengesetzten Ende an die weitere Axialführung (86) anschließt, so dass der Schaltfinger (56) von dem entgegengesetzten Ende in die der Schaltstange (60) zugeordnete Axialführung (66) eingreifen kann, um die Schaltstange (60) in die entgegengesetzte zweite Axialrichtung (82) zu bewegen.

6. Schaltanordnung nach einem der Ansprüche 2 - 5, **dadurch gekennzeichnet, dass** die Rückholeinrichtung (82) eine lösbare Kupplung (83) zwischen der Mutter (52) und der Schaltstange (60) aufweist.

7. Schaltanordnung nach einem der Ansprüche 1 - 6, **dadurch gekennzeichnet, dass** der Radialnut (64) ein Anschlag (72) zugeordnet ist, gegen den die Mutter (52) in einer der ersten Axialrichtung (68) entgegengesetzten zweiten Axialrichtung (82) anschlägt, um eine Verdrehung des Schaltfingers (56) in der Radialnut (64) zu er- zwingen.

8. Schaltanordnung nach Anspruch 7, **dadurch gekennzeichnet, dass** der Anschlag (72) an dem Gehäuse (42) oder an der Spindel ausgebildet ist.

9. Schaltanordnung nach Anspruch 7 oder 8, **dadurch gekennzeichnet, dass** dem Anschlag eine Freilaufeinrichtung (108) zugeordnet ist, die eine Verdrehung der Mutter (58) in einer Drehrichtung zulässt und eine Verdrehung in der anderen Drehrichtung in wenigstens einer vorbestimmten Drehposition sperrt.

10. Schaltanordnung nach Anspruch 9, **dadurch gekennzeichnet, dass** die vorbestimmte Drehposition einer Axialführung (66) für den Schaltfinger (56) zugeordnet ist.

11. Schaltanordnung nach Anspruch 9 oder 10, **dadurch gekennzeichnet, dass** die erste Drehrichtung die Drehrichtung ist, mit der die Spindel verdreht wird, um die Mutter (52) in der zweiten Axialrichtung (82) zu bewegen.

12. Schaltanordnung nach einem der Ansprüche 9 - 11, **dadurch gekennzeichnet, dass** die Freilaufeinrichtung (108) eine Freilaufkontur (110) an der Mutter (52) oder an dem Gehäuse sowie wenigstens einen auf die Freilaufkontur wirkenden Vorsprung (112) an dem Gehäuse (42) oder an der Mutter aufweist.

13. Schaltanordnung nach Anspruch 12, **dadurch gekennzeichnet, dass** die Freilaufkontur an einer axialen Stirnseite der Mutter ausgebildet ist, wobei der Vorsprung (112) an dem Gehäuse gelagert ist und in axialer Richtung hin zur Freilaufkontur (110) elastisch vorgespannt ist.

14. Verfahren zum Betätigen einer Schaltkupplung (28) oder einer Parksperrenanordnung (30) mittels einer Schaltanordnung (10) eines Kraftfahrzeuggetriebes, wobei die Schaltanordnung (10) ausgestattet ist mit
- einem Gehäuse (42),
- einer Spindel (46), die entlang einer Spindelachse (48) ausgerichtet ist, ein Spindelgewinde (50) aufweist und an dem Gehäuse (42) drehbar gelagert ist,
- einer Mutter (52), die ein Muttergewinde (54) aufweist, das mit dem Spindelgewinde (50) in Eingriff steht, wobei an der Mutter ein Schaltfinger (56) ausgebildet ist,
- wenigstens einer Schaltstange (60), die an dem Gehäuse (42) beweglich gelagert ist und die mit der Schaltkupplung (28) koppelbar ist, wobei die Schaltanordnung eine an dem Gehäuse (42) vorgesehene Radialnut (64) aufweist, in die der Schaltfinger in einer Basis-Axialposition der Mutter (52) eingreift und innerhalb der der Schaltfinger (56) verdreht wird, und wobei
an dem Gehäuse (42) eine Axialführung (66) vorgesehen ist, die sich axial an die Radialnut (64) anschließt und in die der Schaltfinger (56) eingreifen kann, um die Mutter (52) in Umfangsrichtung zu halten, so dass diese bei einer Drehung der Spindel in einer ersten Axialrichtung (68) axial versetzt wird,
wobei die Mutter (52) zumindest während eines Abschnittes des Axialversatzes mit der Schaltstange (60) gekoppelt ist, so dass durch Verdrehen der Spindel (46) eine mit der Schaltstange (60) gekoppelte Schaltkupplung (28) betätigt wird,
**dadurch gekennzeichnet, dass** die Kopplung zwischen der Mutter (52) und der Schaltstange (60) dadurch gebildet wird, dass die Mutter (52) an einer Stirnseite der Schaltstange (60) anliegt, so dass die Mutter Axialkräfte in der ersten Axialrichtung (68) auf die Schaltstange (60), die als Schubstange ausgebildet ist, übertragen kann, um die der Schaltkupplung (28) zugeordnete Gangstufe einzulegen.

## Claims

1. Shift arrangement (40) for a motor vehicle transmission (16) which has at least one gear ratio stage that can be engaged and disengaged by means of an associated shift clutch (28), having
- a housing (42),
- a spindle (46) which is oriented along a spindle axis (48), has a spindle thread (50) and is mounted rotatably on the housing (42),
- a nut (52) which has a nut thread (54) which engages with the spindle thread (50), wherein a shift finger (56) is formed on the nut,
- at least one shift rod (60) which is mounted movably on the housing (42) and which is couplable to the shift clutch (28),
- a radial groove (64) which is provided on the housing (42) and into which the shift finger engages in the base axial position of the nut (52) and within which the shift finger (56) is rotatable, and
- an axial guide (66) which is provided on housing (42) and which axially adjoins the radial groove (64) and into which the shift finger (56) can engage in order to hold the nut (52) in a circumferential direction, such that said nut is displaced axially in a first axial direction (68) in the event of a rotation of the spindle,
wherein the nut (52) is, at least during a portion of the axial displacement, coupled to the shift rod (60) such that, by rotation of the spindle (46), a shift clutch (28) coupled to the shift rod (60) can be actuated,
**characterized in that** the coupling between the nut (52) and the shift rod (60) is formed **in that** the nut (52) bears against an end side of the shift rod (60), such that the nut can transmit axial forces in the first axial direction (68) to the shift rod (60), which is designed as thrust rod, in order to engage the gear ratio stage assigned to the shift clutch (28).

2. Shift arrangement according to Claim 1, **characterized in that** the shift rod (60) is movable by means of a retraction device (82) in an opposite, second axial direction (82).

3. Shift arrangement according to Claim 2, **characterized in that** the retraction device (82) has a retraction rod (98), which is mounted movably on the housing and which is assigned to the shift rod (60), and has a further axial guide (99), which is provided on the housing (42) and which adjoins the radial groove (64) in an axial direction and into which the shift finger (56) can engage in order to hold the nut (52) in the circumferential direction, such that said nut is displaced axially in the event of a rotation of the spindle (46), wherein the nut (52) is, at least during a portion of said axial displacement, coupled to the retraction rod (98) such that the retraction rod (98) is displaced in the first axial direction (68), and wherein the retraction rod (98) is coupled to the shift rod (60) such that the axial displacement of the retraction rod (98) in the first axial direction (68) leads to a movement of the shift rod (60) in the second axial direction (82).

4. Shift arrangement according to Claim 3, **characterized in that** the shift rod (60) and the retraction rod (98) are coupled to one another by means of a two-sided lever (102).

5. Shift arrangement according to any of Claims 2 - 4, **characterized in that** the retraction device (82) has a further axial guide (86), which adjoins the radial groove (64) in an axial direction and into which the shift finger (56) can engage in order to hold the nut (52) in the circumferential direction, such that said nut is displaced axially in the first axial direction (68) in the event of a rotation of the spindle (46), and has a further radial groove (87), which adjoins the further axial guide (86) at the opposite end in the axial direction, such that the shift finger (56) can engage from the opposite end into the axial guide (66) assigned to the shift rod (60) in order to move the shift rod (60) in the opposite, second axial direction (82).

6. Shift arrangement according to any of Claims 2 - 5, **characterized in that** the retraction device (82) has a releasable coupling (83) between the nut (52) and the shift rod (60).

7. Shift arrangement according to any of Claims 1 - 6, **characterized in that** the radial groove (64) is assigned a stop (72) against which the nut (52) abuts in a second axial direction (82) opposite to the first axial direction (68) in order to force a rotation of the shift finger (56) in the radial groove (64).

8. Shift arrangement according to Claim 7, **characterized in that** the stop (72) is formed on the housing (42) or on the spindle.

9. Shift arrangement according to Claim 7 or 8, **characterized in that** the stop is assigned a freewheel device (108) which permits a rotation of the nut (58) in one direction of rotation and blocks a rotation in the other direction of rotation in at least one predetermined rotational position.

10. Shift arrangement according to Claim 9, **characterized in that** the predetermined rotational position is assigned to an axial guide (66) for the shift finger (56).

11. Shift arrangement according to Claim 9 or 10, **characterized in that** the first direction of rotation is the direction of rotation in which the spindle is rotated in order to move the nut (52) in the second axial direction (82).

12. Shift arrangement according to any of Claims 9 - 11, **characterized in that** the freewheel device (108) has a freewheel contour (110) on the nut (52) or on the housing and has, on the housing (42) or on the nut, at least one projection (112) which acts on the freewheel contour.

13. Shift arrangement according to Claim 12, **characterized in that** the freewheel contour is formed on an axial end side of the nut, wherein the projection (112) is mounted on the housing and is elastically preloaded in an axial direction toward the freewheel contour (110).

14. Method for actuating a shift clutch (28) or a parking lock arrangement (30) by means of a shift arrangement (10) of a motor vehicle transmission, wherein the shift arrangement (10) is equipped with
- a housing (42),
- a spindle (46) which is oriented along a spindle axis (48), has a spindle thread (50) and is mounted rotatably on the housing (42),
- a nut (52) which has a nut thread (54) which engages with the spindle thread (50), wherein a shift finger (56) is formed on the nut,
- at least one shift rod (60) which is mounted movably on the housing (42) and which is couplable to the shift clutch (28), wherein
the shift arrangement has a radial groove (64) which is provided on the housing (42) and into which the shift finger engages in a base axial position of the nut (52) and within which the shift finger (56) is rotated, and wherein
an axial guide (66) is provided on the housing (42), which axial guide axially adjoins the radial groove (64) and into which axial guide the shift finger (56) can engage in order to hold the nut (52) in a circumferential direction, such that said nut is displaced axially in a first axial direction (68) in the event of a rotation of the spindle,
wherein the nut (52) is, at least during a portion of the axial displacement, coupled to the shift rod (60) such that, by rotation of the spindle (46), a shift clutch (28) coupled to the shift rod (60) is actuated,
**characterized in that** the coupling between the nut (52) and the shift rod (60) is formed **in that** the nut (52) bears against an end side of the shift rod (60), such that the nut can transmit axial forces in the first axial direction (68) to the shift rod (60), which is designed as thrust rod, in order to engage the gear ratio stage assigned to the shift clutch (28).

## Revendications

1. Agencement de commutation (40) pour une boîte de vitesses de véhicule automobile (16), qui présente au moins un rapport de changement de vitesses qui peut être engagé et désengagé au moyen d'un embrayage de changement de vitesses associé (28), comprenant
- un boîtier (42),
- une broche (46) qui est orientée le long d'un axe de broche (48), présente un filetage de broche (50) et est supportée de manière rotative sur le boîtier (42),
- un écrou (52) qui présente un filetage d'écrou (54) qui est en prise avec le filetage de broche (50), un doigt de commutation (56) étant réalisé sur l'écrou,
- au moins une tige de commutation (60) qui est supportée de manière déplaçable sur le boîtier (42) et qui peut être accouplée à l'embrayage de changement de vitesses (28),
- une rainure radiale (64) prévue sur le boîtier (42), dans laquelle s'engage le doigt de commutation dans une position axiale de base de l'écrou (52) et à l'intérieur de laquelle le doigt de commutation (56) peut tourner, et
- un guide axial (66) prévu sur le boîtier (42), lequel se raccorde axialement à la rainure radiale (64) et dans lequel le doigt de commutation (56) peut s'engager afin de retenir l'écrou (52) dans la direction périphérique, de telle sorte que celui-ci soit décalé axialement lors d'une rotation de la broche dans une première direction axiale (68),
l'écrou (52), au moins pendant une portion du décalage axial, étant accouplé à la tige de commutation (60), de telle sorte que par rotation de la broche (46), un embrayage de changement de vitesses (28) accouplé à la tige de commutation (60) puisse être actionné,
**caractérisé en ce que** l'accouplement entre l'écrou (52) et la tige de commutation (60) est formé par le fait que l'écrou (52) s'applique contre un côté frontal de la tige de commutation (60) de telle sorte que l'écrou puisse transmettre les forces axiales dans la première direction axiale (68) à la tige de commutation (60) qui est réalisée sous forme de tige de poussée, afin d'engager le rapport de changement de vitesses associé à l'embrayage de changement de vitesses (28).

2. Agencement de commutation selon la revendication 1, **caractérisé en ce que** la tige de commutation (60) peut être déplacée au moyen d'un dispositif de rappel (82) dans une deuxième direction axiale opposée (82).

3. Agencement de commutation selon la revendication 2, **caractérisé en ce que** le dispositif de rappel (82) présente une tige de rappel (98) supportée de manière déplaçable sur le boîtier, laquelle est associée à la tige de commutation (60), et un guide axial supplémentaire (99) prévu sur le boîtier (42) qui se raccorde dans la direction axiale à la rainure radiale (64) et dans lequel peut s'engager le doigt de commutation (56) afin de retenir l'écrou (52) dans la direction périphérique de telle sorte que celui-ci, lors d'une rotation de la broche (46), soit décalé axialement, l'écrou (52), au moins pendant une portion de ce décalage axial, étant accouplé à la tige de rappel (98) de telle sorte que la tige de rappel (98) soit décalée dans la première direction axiale (68) et la tige de rappel (98) étant accouplée à la tige de commutation (60) de telle sorte que le décalage axial de la tige de rappel (98) dans la première direction axiale (68) conduise à un déplacement de la tige de commutation (60) dans la deuxième direction axiale (82).

4. Agencement de commutation selon la revendication 3, **caractérisé en ce que** la tige de commutation (60) et la tige de rappel (98) sont accouplées l'une à l'autre par le biais d'un levier bilatéral (102).

5. Agencement de commutation selon l'une quelconque des revendications 2 à 4, **caractérisé en ce que** le dispositif de rappel (82) présente un guide axial supplémentaire (86) qui se raccorde à la rainure radiale (64) dans la direction axiale et dans lequel peut s'engager le doigt de commutation (56) afin de retenir l'écrou (52) dans la direction périphérique de telle sorte que celui-ci, lors d'une rotation de la broche (46), soit décalé dans la première direction axiale (68), et présente une rainure radiale supplémentaire (87) qui se raccorde dans la direction axiale à l'extrémité opposée au guide axial supplémentaire (86) de telle sorte que le doigt de commutation (56) puisse s'engager depuis l'extrémité opposée dans le guide axial (66) associé à la tige de commutation (60) afin de déplacer la tige de commutation (60) dans la deuxième direction axiale opposée (82).

6. Agencement de commutation selon l'une quelconque des revendications 2 à 5, **caractérisé en ce que** le dispositif de rappel (82) présente un accouplement desserrable (83) entre l'écrou (52) et la tige de commutation (60).

7. Agencement de commutation selon l'une quelconque des revendications 1 à 6, **caractérisé en ce que** la rainure radiale (64) est associée à une butée (72) contre laquelle bute l'écrou (52), dans une deuxième direction axiale (82) opposée à la première direction axiale (68), afin de forcer une rotation du doigt de commutation (56) dans la rainure radiale (64).

8. Agencement de commutation selon la revendication 7, **caractérisé en ce que** la butée (72) est réalisée sur le boîtier (42) ou sur la broche.

9. Agencement de commutation selon la revendication 7 ou 8, **caractérisé en ce qu'**un dispositif de roue libre (108) est associé à la butée, lequel permet une rotation de l'écrou (58) dans un sens de rotation et bloque une rotation dans l'autre sens de rotation dans au moins une position de rotation prédéterminée.

10. Agencement de commutation selon la revendication 9, **caractérisé en ce que** la position de rotation prédéterminée est associée à un guide axial (66) pour le doigt de commutation (56).

11. Agencement de commutation selon la revendication 9 ou 10, **caractérisé en ce que** le premier sens de rotation est le sens de rotation avec lequel la broche est tournée de manière à déplacer l'écrou (52) dans la deuxième direction axiale (82).

12. Agencement de commutation selon l'une quelconque des revendications à 11, **caractérisé en ce que** le dispositif de roue libre (108) présente un contour de roue libre (110) sur l'écrou (52) ou sur le boîtier ainsi qu'au moins une saillie (112) sur le boîtier (42) ou sur l'écrou, agissant sur le contour de roue libre.

13. Agencement de commutation selon la revendication 12, **caractérisé en ce que** le contour de roue libre est réalisé au niveau d'un côté frontal axial de l'écrou, la saillie (112) étant supportée sur le boîtier et étant précontrainte élastiquement dans la direction axiale vers le contour de roue libre (110).

14. Procédé d'actionnement de l'embrayage de changement de vitesses (28) ou d'un agencement de verrouillage de stationnement (30) au moyen d'un agencement de commutation (10) d'une boîte de vitesses de véhicule automobile, l'agencement de commutation (10) comprenant
- un boîtier (42),
- une broche (46) qui est orientée le long d'un axe de broche (48), présente un filetage de broche (50) et est supportée de manière rotative sur le boîtier (42),
- un écrou (52) qui présente un filetage d'écrou (54) qui est en prise avec le filetage de broche (50), un doigt de commutation (56) étant réalisé sur l'écrou,
- au moins une tige de commutation (60) qui est supportée de manière déplaçable sur le boîtier (42) et qui peut être accouplée à l'embrayage de changement de vitesses (28),
l'agencement de commutation présentant une rainure radiale (64) prévue sur le boîtier (42), dans laquelle s'engage le doigt de commutation dans une position axiale de base de l'écrou (52) et à l'intérieur de laquelle le doigt de commutation (56) est tourné, et
un guide axial (66) étant prévu sur le boîtier (42), lequel se raccorde axialement à la rainure radiale (64) et dans lequel le doigt de commutation (56) peut s'engager afin de retenir l'écrou (52) dans la direction périphérique, de telle sorte que celui-ci soit décalé axialement lors d'une rotation de la broche dans une première direction axiale (68),
l'écrou (52), au moins pendant une portion du décalage axial, étant accouplé à la tige de commutation (60), de telle sorte que par rotation de la broche (46), un embrayage de changement de vitesses (28) accouplé à la tige de commutation (60) est actionnée,
**caractérisé en ce que** l'accouplement entre l'écrou (52) et la tige de commutation (60) est formé par le fait que l'écrou (52) s'applique contre un côté frontal de la tige de commutation (60) de telle sorte que l'écrou puisse transmettre les forces axiales dans la première direction axiale (68) à la tige de commutation (60) qui est réalisée sous forme de tige de poussée, afin d'engager le rapport de changement de vitesses associé à l'embrayage de changement de vitesses (28).
